# EUROPEAN PATENT APPLICATION

(11) **EP 2 615 810 A1**
(43) Date of publication of application: **17.07.2013**
(21) Application number: 12425008.5
(22) Date of filing: 16.01.2012
(51) Int. Cl.: H04M 1/725, H04B 1/38

(54) **Electronic device suitable to provide a personal communication by local radio data transmission**

(71) Applicant: Di Tocco, Ignazio, 00040 Ardea (RM) (IT)
(72) Inventor: Di Tocco, Ignazio, 00040 Ardea (RM) (IT)
(74) Representative: Zizzari, Massimo

(57) **Abstract**

Electronic device (10), suitable to provide a personal communication by local radio data transmission, **characterized in that** comprising:
communication means, including a radio transceiver (11) with antenna (21); signalling means including: a display (14) and an acoustic unit (16); means of user interface, including a rotary commutator with a button switch (17); power supply means, preferably made of a lithium battery with on/off switch (13); means of serial data communication, including a serial port (18) and related connector (19); controlling means, composed of a microprocessor unit (12) with memory and internal data bus (20), including through a *firmware,* a complete process of:
encoding and generation of a message, including a user profile to be irradiated at distance; management of said radio communication means; analysis of an input data flow and of intensity of the electromagnetic field; decoding of user profiles encoded in said input data flow, and matching with a set of user profiles internally saved; signalling of compatibility of received user profiles with the ones internally saved; management of said means of user interface; management of said means of serial data communication.

## Description

The present invention is related to an electronic device that can be put on as a wear accessory, like a watch or a bracelet, and that enables the detection of similar devices located in the same area, and the communication in order to match user profiles and make it possible to establish contacts of persons having similar features and interests.

Therefore, this device achieves a continue analysis of digital data, transmitted by similar objects located in the same area. The data transmission is obtained by emission of radio signals, properly modulated by data concerning user profiles and other profile matching strategies.

In particular, a user profile can be related to personal data, like in example: a description of personality and interests, hobby, sport, astrological sign, telephone number, e-mail address, etc.

The electronic device of the present invention represents indeed a vehicle suitable to enter in touch and to know new persons, who are located in the same area and who wear a similar device.

The same device includes a display where a receiving person can visualize information about other devices in the same area, and can decide immediately whether establish a connection or not, keeping in any case a personal privacy and certainty of confidentiality.

As known, the internet and mobile telephone technologies have seen in recent years a large increase of applications supporting the so called *social networks.* Some examples are given by internet websites, like *Facebook*®, *MySpace*® and *Linkedln*®, that enable to people the establishment of contact networks and to exchange continuously information and messages with friends, relatives, colleagues and acquaintances. Recently, these websites have been made accessible either from mobile telephone networks, therefore they really represent a standard technology, useful to be connected from everywhere with the personal contact network, that is the personal *social network.* According to these websites, managing the process of users interactions, personal contacts are established by sending a *request of friendship,* and the addressed persons are chosen from that known in real life, or from lists of people belonging to specific groups, or from that attending virtual events, or from unknown people by looking at personal data saved on their user profile.

The present invention is based on observation that the best place where persons should meet each other should be the real life, and websites for social networks can be used to keep in touch with people already known from real life. For this reason the electronic device is an object suitable to find out and establish a contact in real life with that kind of people wanted to know.

Therefore, it is specific subject of the present invention an electronic device, suitable to provide a personal communication by local radio data transmission, **characterized in that** comprising:
communication means, including a radio transceiver with antenna; signalling means including: a display and an acoustic unit; means of user interface, including a rotary commutator with a button switch; power supply means, preferably made of a lithium battery with on/off switch; means of serial data communication, including a serial port and related connector; controlling means, composed of a microprocessor unit with memory and internal data bus, including through a *firmware,* a complete process of: encoding and generation of a message, including a user profile to be irradiated at distance; management of said radio communication means; analysis of an input data flow and of intensity of the electromagnetic field; decoding of user profiles encoded in said input data flow, and matching with a set of user profiles internally saved; signalling of compatibility of received user profiles with the ones internally saved; management of said means of user interface; management of said means of serial data communication.

The present invention will now be described for illustrative but non-limiting purposes, with particular reference to figures of the enclosed drawings, wherein:
figure 1 is a schematic view of an architecture comprising the main elements of an electronic device according to the present invention;
figure 2 is a schematic view of a communication flow of an electronic device like that of figure 1;
figure 3 is a schematic view of a data flow concerning a query of transmission and receipt of an electronic device like that of figure 1;
figure 4 is a schematic view of a transmission string format of an electronic device like that of figure 1;
figure 5 is a schematic view of an architecture concerning the analysis of messages that have been received, by an electronic device like that of figure 1, and related to the consequent activation and control of the internal elements.

It is here underlined that only few of the many conceivable embodiments of the present invention are described, which are just some specific non-limiting examples, having the possibility to describe many other embodiments based on the disclosed technical solutions of the present invention.

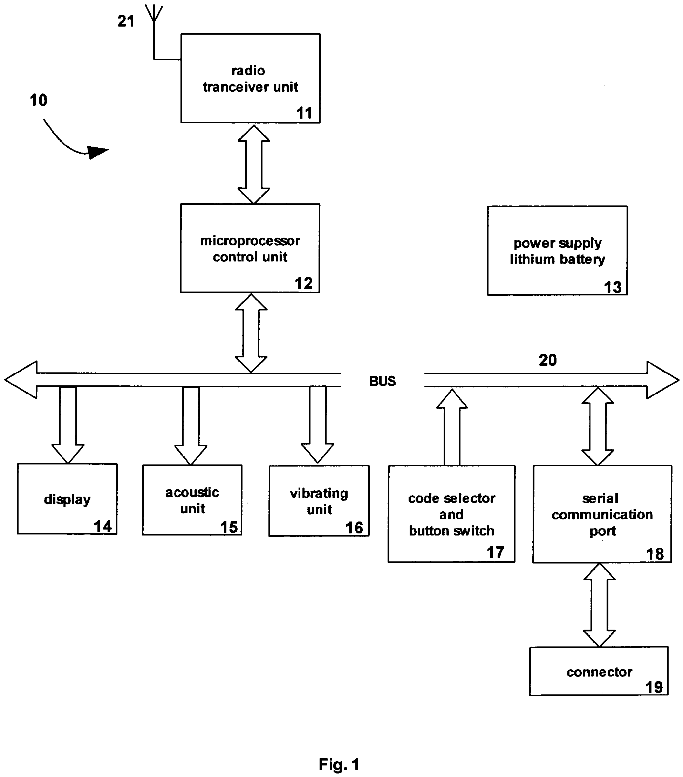

With reference to figure 1, the electronic device 10 comprises: communication means, including a radio transceiver 11 with antenna 21; signalling means including: a display 14 and an acoustic unit 16; means of user interface, including a rotary commutator with a button switch 17; power supply means, preferably made of a lithium battery with on/off switch 13; means of serial data communication, including a serial port 18 and related connector 19; controlling means, composed of a microprocessor unit 12 with memory and internal data bus 20.

The microprocessor unit 12 embeds, through a *firmware,* a complete process of: encoding and generation of a message, including a user profile to be irradiated at distance; management of said radio communication means; analysis of an input data flow and of intensity of the electromagnetic field; decoding of user profiles encoded in said input data flow, and matching with a set of user profiles internally saved; signalling of compatibility of received user profiles with the ones internally saved; management of said means of user interface; management of said means of serial data communication.

With reference to the radio transceiver 11 with antenna 21, this is properly designed and assembled in order to detect similar devices in the same area. Therefore, proper band frequencies are used for this type of applications, that achieve a significant diffusion depth and a low energy consumption at the same time. Furthermore, according to the embodiment of a device that is power supplied by batteries and that has a small size, the radio transceiver 11 is managed on three time slots, one alternative to the others: transmission, reception and pause.

Nowadays some modules are available from the market, produced by a large number of companies, that can be used in this type of applications. In example, *half duplex transceivers* can be used, using the low frequencies of the UHF band, with a maximum radiative power of 0,01 W ERP.

One of these modules is a radio unit, working at a nominal value of 433,96 MHz, having 10 channels selectable between 433,19 MHz and 434,57 MHz, emission power between -8 and +10 dBm (10 mW), modulation method FSK (*Frequency Shift Keying*) with *Manchester-Hamming* encoding in order to correct errors in each single nibble of data, sensitivity in reception of-105 dBm, minimum slot of 10 ms, and communication at 9600 baud rate.

Another example is a radio unit, working at a nominal value of 869,87 MHz, having 7 channels selectable between 868,19 MHz and 869,87 MHz, emission power between -8 and +10 dBm (10 mW), modulation method GFSK (*Gaussian Frequency Shift Keying*) with *Manchester-Hamming* encoding in order to correct errors in each single nibble of data, sensitivity in reception of -105 dBm, minimum slot of 10 ms, and communication at 9600 baud rate.

The diffusion of information in the environment follows the model of the electromagnetic waves, and the characteristics of impedance and polarization are defined according to the type of used antenna and to location of the radiation lobes. The antenna 21 used in the radio transceiver 11 belongs to the adapted ring type that, placed along the vertical direction, achieves a good diffusion on the horizontal plane, so that a signal can be transmitted up to a distance of beyond 200 meters, in conditions of outdoor environment without obstacles. Instead, in an indoor environment the phenomenon of reflection and/or absorption by walls and contained obstacles decreases the efficiency of signal propagation that reaches a maximum distance of few tens of meters. In such conditions the device can be used either, but the range of action results to be lower in respect to an ideal outdoor situation.

As previously described, the microprocessor unit 12 embeds a process of connection request and search, and uses the transceiver 11 adapting the parameters of emission and reception as a function of environmental conditions concerning intensity of field and possible background noise.

In case a radio receiver detects the presence of environmental noise, in example a continuous or pulse noise, the radio channel is changed and tested. Therefore, channels are tested one after the other, by a continuous scan, until an available channel to be used is found. In case noise is so intense and wide that no channel can be used, then device 10 cannot be used, and then a text or a code would be visualized on display 14 in order to indicate the malfunction condition. In case a radio channel is busy, the microprocessor unit 12 would analyze the data flow, and would recognize messages on the same channel transmitted by similar or twin devices. Twin devices are devices having a user profile, saved previously internally, that is identical or compatible each other, or that matches to specific search parameters (like in example: physical features, personal views, job activities, hobby, etc.).

Therefore, in case that twin devices are detected a radio transmission is encoded answering from a device 10 to another one. Instead, in case that twin devices are not detected then no communication is established.

However, each device starts a radio transmission containing data of a respective user profile that is saved internally, with a periodic rate including a random delay, that is a way to avoid interference between similar devices 10, that process the same search activity at the same time.

It is possible that, following a connection request, a device receives an answer from more similar devices, having a little delay like previously described. This situation would represent that two or more devices 10, located in the same area, are detected, and that they have similar or compatible user profiles, with the same devices possibly located at different distances.

In order to find the closest one, the microprocessor unit 12 saves the serial codes of the detected devices 10, decreases the sensitivity of signal reception of the antenna 21 until the furthest device 10 is no more detectable. At this time, device 10 that keeps instead the strongest signal is selected, because it is considered to be the closest to the current user.

The answer to a connection request is encoded as a message having the delay according to the random parameter as previously described.

Each device 10 is listening or transmitting alternatively: in case a message from another device 10 in the area would be received, containing a user profile similar or compatible with that internally saved, then the situation would be indicated to the user by one or more of the following ways: mechanical vibration; soft acoustic signal that can be interrupted by a button; visualization on display 14 of the detected distance; visualization on display 14 of a previously defined text. Instead, in case a message from another device 10 in the area would be received, containing a user profile not similar or not compatible with that internally saved, then no answer would be generated and the search for other devices 10 would continue indefinitely.

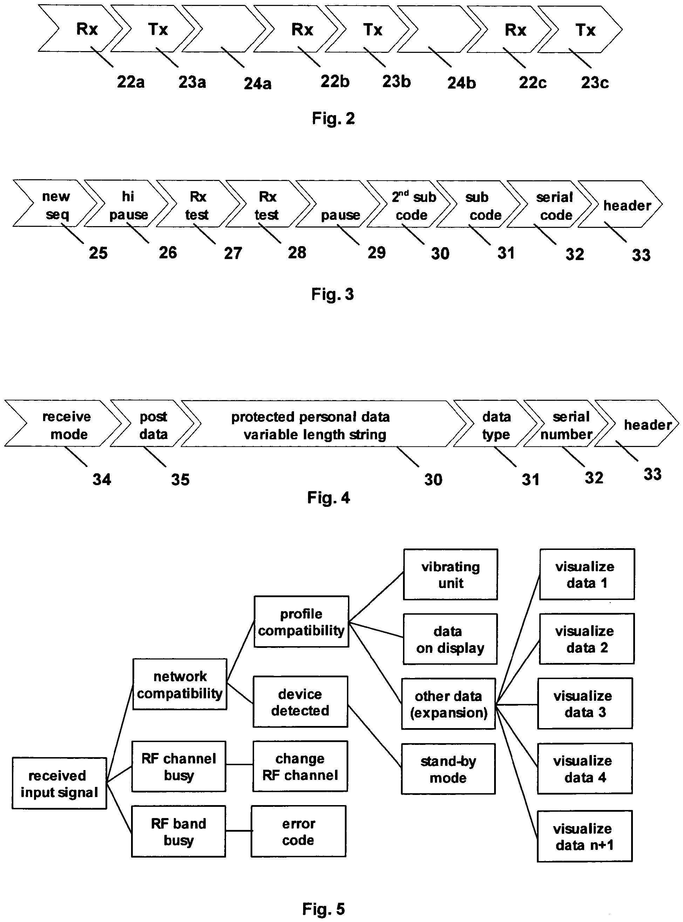

Figures 2, 3 and 4 show a communication protocol concerning a message, so called *frame,* transmitted from a device 10, said message being composed by the following elements:
- header 33, including an ordered sequence of 0 and 1, as modulation of carrier suitable to synchronize the transmission of listening devices 10;
- *serial* code 32, that is a unique individual code, related to the serial number of device 10;
- *sub* code 31, user profile code, or belonging class that can be chosen between 99 previously defined classes;
- 2nd *sub* code 30, user profiles data, eventually in protected or encoded mode with algorithm at 128 bit;
- *post code* 35, including a code of *end of file* (EOF).

Therefore, the protocol defined in this way implies that a data transmission uses a short temporal slot, followed by a stage of *pause* 29 that is necessary in order to allow a synchronism and the answer of one or more twin devices 10, and this answer would be analyzed during the stage of *Rx test* 27, 28.

In case there should be no answers following a connection request, the device 10 would make a longer pause, so that to minimize the energy consumption of batteries 13, before to repeat the sequence of protocol.

Figure 5 shows a block diagram related to analysis of incoming data by an electronic device 10 and to the consequent activations and control of the internal components.

With reference to information contained in user profile, or features of the same user, or features belonging to search parameters, these can be encoded using a number between 0-9 associated to some specific classes of persons. Furthermore, primary and secondary features can be encoded using pairs of numbers 0-9, composing therefore a matrix of elements correlated each other.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. Electronic device (10), suitable to provide a personal communication by local radio data transmission, **characterized in that** comprising:
- communication means, including a radio transceiver (11) with antenna (21); signalling means including: a display (14) and an acoustic unit (16); means of user interface, including a rotary commutator with a button switch (17); power supply means, preferably made of a lithium battery with on/off switch (13); means of serial data communication, including a serial port (18) and related connector (19); controlling means, composed of a microprocessor unit (12) with memory and internal data bus (20), including through a *firmware,* a complete process of: encoding and generation of a message, including a user profile to be irradiated at distance; management of said radio communication means; analysis of an input data flow and of intensity of the electromagnetic field; decoding of user profiles encoded in said input data flow, and matching with a set of user profiles internally saved; signalling of compatibility of received user profiles with the ones internally saved; management of said means of user interface; management of said means of serial data communication.

2. Electronic device (10), suitable to provide a personal communication, according to previous claim 1, **characterized in that**:
- said radio transceiver (11) is composed of a *half duplex transceiver* using the low frequencies of the UHF band, with a maximum radiative power of 0,01 W ERP, more exactly it is a radio unit working at a nominal value of 433,96 MHz, having 10 channels selectable between 433,19 MHz and 434,57 MHz, emission power between -8 and +10 dBm (10 mW), modulation method FSK (*Frequency Shift Keying*) with *Manchester-Hamming* encoding in order to correct errors in each single nibble of data, sensitivity in reception of -105 dBm, minimum slot of 10 ms, and communication at 9600 baud rate.

3. Electronic device (10), suitable to provide a personal communication, according to previous claim 1, **characterized in that**:
- said radio transceiver (11) is composed of a *half duplex transceiver* using the low frequencies of the UHF band, with a maximum radiative power of 0,01 W ERP, more exactly it is a radio unit working at a nominal value of 869,87 MHz, having 7 channels selectable between 868,19 MHz and 869,87 MHz, emission power between -8 and +10 dBm (10 mW), modulation method GFSK (*Gaussian Frequency Shift Keying*) with *Manchester-Hamming* encoding in order to correct errors in each single nibble of data, sensitivity in reception of -105 dBm, minimum slot of 10 ms, and communication at 9600 baud rate.

4. Electronic device (10), suitable to provide a personal communication, according to one or more of previous claims, **characterized in that**:
- antenna (21) used in the radio transceiver (11) belongs to the adapted ring type that, placed along the vertical direction, achieves a good diffusion on the horizontal plane, so that a signal can be transmitted up to a distance of beyond 200 meters, in conditions of outdoor environment without obstacles.

5. Electronic device (10), suitable to provide a personal communication, according to one or more of previous claims, **characterized in that**:
- the microprocessor unit (12) embeds a process of connection request and search, and uses the transceiver (11) adapting the parameters of emission and reception as a function of environmental conditions concerning intensity of field and possible background noise.

6. Electronic device (10), suitable to provide a personal communication, according to previous claim 5, **characterized in that**:
- said process of connection request and search defines that, in case a radio receiver detects the presence of environmental noise, in example a continuous or pulse noise, the radio channel is changed and tested; therefore, channels are tested one after the other, by a continuous scan, until an available channel to be used is found; in case noise is so intense and wide that no channel can be used, then device (10) cannot be used, and then a text or a code would be visualized on display (14) in order to indicate the malfunction condition.

7. Electronic device (10), suitable to provide a personal communication, according to previous claim 5, **characterized in that**:
- said process of connection request and search defines that, in case a radio channel is busy, the microprocessor unit (12) would analyze the data flow, and would recognize messages on the same channel transmitted by similar or twin devices; twin devices are devices having a user profile, saved previously internally, that is identical or compatible each other, or that matches to specific search parameters - like in example: physical features, personal views, job activities, hobby, etc.; in case that twin devices are detected a radio transmission is encoded answering from a device (10) to another one; instead, in case that twin devices are not detected then no communication is established.

8. Electronic device (10), suitable to provide a personal communication, according to one or more of previous claims, **characterized in that**:
- said device (10) starts a radio transmission containing data of a respective user profile that is saved internally, with a periodic rate including a random delay, that is a way to avoid interference between similar devices (10), that process the same search activity at the same time.

9. Electronic device (10), suitable to provide a personal communication, according to one or more of previous claims, **characterized in that**:
- if, following a connection request, a device (10) receives an answer from similar devices (10), that have similar or compatible user profiles, and are located in the same area, said process of connection request and search defines that, in order to find the closest one, the microprocessor unit (12) saves the serial codes of the detected devices (10), decreases the sensitivity of signal reception of the antenna (21) until the furthest device (19) is no more detectable; at this time, device (10) that keeps instead the strongest signal is selected, because it is considered to be the closest to the current user.

10. Electronic device (10), suitable to provide a personal communication, according to one or more of previous claims, **characterized in that**:
- each device (10) is listening or transmitting alternatively: in case a message from another device (10) in the area would be received, containing a user profile similar or compatible with that internally saved, then the situation would be indicated to the user by one or more of the following ways: mechanical vibration; soft acoustic signal that can be interrupted by a button; visualization on display (14) of the detected distance; visualization on display (14) of a previously defined text.

11. Electronic device (10), suitable to provide a personal communication, according to one or more of previous claims, **characterized in that**:
- each device (10) is listening or transmitting alternatively: in case a message from another device (10) in the area would be received, containing a user profile not similar or not compatible with that internally saved, then no answer would be generated and the search for other devices (10) would continue indefinitely.

12. Electronic device (10), suitable to provide a personal communication, according to one or more of previous claims, **characterized in that** said microprocessor unit (12) embeds a communication protocol concerning a message, so called *frame,* said message being composed by the following elements:
- *header* (33), including an ordered sequence of 0 and 1, as modulation of carrier suitable to synchronize the transmission of listening devices (10);
- *serial* code (32), that is a unique individual code, related to the serial number of device (10);
- *sub code* (31), user profile code, or belonging class that can be chosen between 99 previously defined classes;
- 2nd *sub code* (30), user profiles data, eventually in protected or encoded mode with algorithm at 128 bit;
- *post code* (35), including a code of *end of file* (EOF).

13. Electronic device (10), suitable to provide a personal communication, according to previous claim 12, **characterized in that**:
- said communication protocol defines that a data transmission uses a short temporal *slot,* followed by a stage of pause (29) that is necessary in order to allow a synchronism and the answer of one or more twin devices (10), and this answer would be analyzed during the stage of Rx *test* (27), (28).

14. Electronic device (10), suitable to provide a personal communication, according to previous claim 12, **characterized in that**:
- said communication protocol defines that, in case there should be no answers following a connection request, the device (10) would make a longer pause, so that to minimize the energy consumption of batteries (13), before to repeat the sequence of protocol.

15. Electronic device (10), suitable to provide a personal communication, according to one or more of previous claims, **characterized in that**, with reference to information contained in user profile:
- features of the same user, or features belonging to search parameters, these can be encoded using a number between 0-9 associated to some specific classes of persons; furthermore, primary and secondary features can be encoded using pairs of numbers 0-9, composing therefore a matrix of elements correlated each other.
